# EUROPÄISCHE PATENTSCHRIFT

(11) **EP 1 183 648 B1**
(45) Veröffentlichungstag und Bekanntmachung des Hinweises auf die Patenterteilung: **30.06.2004**
(21) Anmeldenummer: 00936612.1
(22) Anmeldetag: 12.04.2000
(51) Int. Cl.: G06T 9/00

(54) **VORRICHTUNG UND VERFAHREN ZUR ZEITLICHEN BEARBEITUNG VON VIDEOBITSTRÖMEN**
DEVICE AND METHOD FOR PROCESSING TEMPORALLY SUCCESSIVE DATA PACKETS
DISPOSITIF ET PROCEDE DE TRAITEMENT TEMPOREL DE TRAINS DE BITS VIDEO

(30) Priorität: 13.04.1999 DE 19916604
(43) Veröffentlichungstag der Anmeldung: 06.03.2002
(73) Patentinhaber: PS Miro Holdings Inc. & Co. KG, 81925 München (DE)
(72) Erfinder: Zahn, Matthias, 80638 München (DE)
(74) Vertreter: Verscht, Thomas K.
(86) Internationale Anmeldenummer: PCT/DE2000/001130
(87) Internationale Veröffentlichungsnummer: WO 2000/062254

(56) Entgegenhaltungen:
- EP-A- 0 762 750
- US-A- 4 942 470
- US-A- 5 844 594
- "COLOR AVERAGING CIRCUIT IN RGB SPACE" IBM TECHNICAL DISCLOSURE BULLETIN,US,IBM CORP. NEW YORK, Bd. 31, Nr. 9, 1. Februar 1989 (1989-02-01), Seiten 40-42, XP000110488 ISSN: 0018-8689

## Beschreibung

Die vorliegende Erfindung betrifft eine Vorrichtung zur Bearbeitung von zeitlich aufeinanderfolgenden Datenpaketen gemäß dem Oberbegriff des Patentanspruchs 1. Ferner betrifft die vorliegende Erfindung ein Verfahren zur Bearbeitung von aufeinanderfolgenden Datenpaketen gemäß Patentanspruch 26 und 27. Schließlich betrifft die vorliegende Erfindung eine Anordnung gemäß dem Oberbegriff des Patentanspruchs 34.

Beim Einsatz computerbasierter Bildbearbeitung treten bei der Manipulation der Daten Rechenzeiten auf, die je nach Komplexität der Berechnungen und Größe bzw. Menge der zu verarbeitenden Daten zu erheblichen Wartezeiten führen.

Der Einsatz von Computern zur Videobearbeitung ("nonlinear editing", NLE) verstärkt diese Problematik, da eine Sekunde. Video typischerweise aus 25 Bildern á 720x576 Bildpunkten (625/25 Systeme, z.B. PAL) bzw. 30 Bildern á 720x480 (525/60 Systeme, z. B. NTSC) bestehen. Zukünftig werden die Daten weiter anwachsen, da neue, digitale Fernsehstandards über weiter erhöhte Auflösungen verfügen. Die Entwicklung der TV-Technologie geht hin zu hochauflösenden Formaten, wobei die Datenrate um den Faktor 4-8 ansteigen wird.

Deshalb sind Kompressionsverfahren bekannt, um die entstehende Datenrate auf ein Maß zu reduzieren, das heutige, preisgünstige Festplattensysteme handhaben können. Kompressionsarten sind, z. B. MJPEG, MPEG, DV (alle verlustbehaftet) oder RLE (verlustfrei).

In der Nachbearbeitung von Videosignalen werden Szenen gekürzt, verändert, und neu zusammengefügt. Dabei treten Manipulationen, wie z. B. Vertiteln, Übergangseffekte etc. auf.

Am Ende einer Manipulation bzw. aller Manipulationen einer Zeiteinheit ("frame") steht stets das Aufeinanderrechnen aller in diesem Frame zu berücksichtigen Ebenen. Dieser Vorgang wird auch als "Mixdown" bezeichnet. Alle Manipulationen sowie der Mixdown werden ausschließlich in der transparenten Ebene ausgeführt werden. Eine direkte Manipulation von komprimierten Bilddaten ist nicht möglich, weshalb nach der Manipulation bei komprimiert arbeitenden Systemen immer eine erneute Kompression erfolgen muß.

Als Rendering bezeichnet man das Ausführen der Manipulationen und das Zusammenrechnen aller beteiligten Ebenen zu einem Frame. Beim Rendering gibt es grundsätzlich zwei Ansätze:
- Echzeit/Synchron: Die Operation (oder auch mehrere gleichzeitig) für einen Frame kann innerhalb 1/25 Sekunde (bei 625/50 Systemen), also synchron zum Abspielen, ausgeführt werden. Wird die Sequenz abgespielt, können somit alle Manipulationen sofort und ohne Verzögerung durchgeführt und betrachtet werden. Echtzeit-Rendering erfordert gemäß dem Stand der Technik für die allermeisten Operationen eine speziell entwickelte Hardware. Je komplexer die Effekte (z. B. 3D-Transitionen), und je mehr Operationen gleichzeitig durchgeführt werden können (z. B. gleichzeitig: Farbkorrektur auf 2 Ebenen, Transition dazwischen und ein Titel über dem Ergebnis) desto teurer ist die notwendige Hardware, und desto komplizierter die zugrunde liegende Architektur.
- Asynchron: Bevor ein Frame abgespielt werden kann, muß dieser komplett gerechnet werden (inkl. aller Operationen über alle Ebenen). Meist muß die gesamte Sequenz komplett gerechnet werden bevor das Ergebnis betrachtet werden kann. Dabei analysiert ein "Parser" die Sequenz Frame für Frame und rechnet u. U. Stellen, die noch nicht gerechnet sind. Das Rechnen wird meist über den/die Hauptprozessor(en) der Computer abgewickelt. In den meisten Fällen ist asynchrones Rendern langsamer als Echtzeit-Rendering.

Qualitativ unterscheiden sich die bekannten NLE-Systeme zum Teil erheblich. Die Algorithmen, die zur Berechnung und v. a. Interpolation herangezogen werden, sind ausschlaggebend für die erreichbare Qualität. Aufwendige Berechnungstechniken erfordern naturgemäß längere Rechenzeiten.

Beim Videoediting ist es jedoch nicht immer erforderlich, permanent in bester Auflösung und Qualität zu arbeiten. Zum Beurteilen eines Effekt bzw. der Wirkung einer Einstellung ist vielmehr eine sofortige Interaktivität und die Möglichkeit, das Ergebnis im zeitlichen Ablauf sofort beurteilen zu können. Dabei ist eine niedrigere Auflösung (kleiner Bilder, z. B. 1/4) und/oder die Berechnung in Vorschauqualität ("draft") ausreichend.

Rechensysteme mit mehreren Prozessoren (Multiprozessor-Systeme) bestehen in vielen Anwendungen. Hochleistungscomputer verwenden dabei eine als "massiv parallel" bekannte Architektur, bei denen viele (bis zu mehreren Hundert) Prozessoren gleichzeitig an verschiedenen Teilaufgaben ("Thread") einer größeren Aufgabe ("Task") rechnen. Dieses Prinzip garantiert enorme Rechenkapazitäten, erfordert aber spezielle Architekturen und Software und ist entsprechend teuer.

Seit am PC professionell Bildbearbeitung Verbreitung findet, werden derartige Multiprozessor-Systeme benutzt, um die Rechenzeit aufwendiger Operationen zu reduzieren. Dabei wird meistens das Bild in mehrerer (typischerweise vier) Teile geteilt ("Tiling"). Jeder Prozessor rechnet in diesem Beispielsfall nur noch an einem Viertel der Gesamtauflösung, was die Rechenzeit theoretisch vierteln würde (Verhältnis 4:1). In der Praxis ergeben sich aufgrund praktischer Einschätzungen allerdings lediglich Werte zwischen 1,5:1 und 2,5:1.

Auch in der Videobearbeitung unterstützen inzwischen einige Applikationen das Verteilen der Threads auf mehrere Prozessoren. Zudem sind "Beschleuniger" erhältlich, die über spezielle Prozessoren verfugen. Diese Beschleuniger entlasten den/die Hauptprozessor(en) und können speziell angepaßte Funktionen noch schneller rechnen. Die Architektur und Verteilung der Threads ist dabei von der Bildbearbeitung abgeleitet, Video wird als Kette von Einzelbildern gesehen. Die Berechnung einer Zeiteinheit eines Videosignals bzw. eines Frames wird dabei auf die Prozessoren des Beschleunigers und/oder die Hauptprozessoren aufgeteilt. Sobald das Frame fertig gerendert wurde, wird das nächste Frame gerechnet, usw., bis schließlich alle zu rechnenden Frames erfolgreich abgeschlossen wurden.

Allen diesen Systemen ist gemeinsam, daß zwar die beschriebenen Funktionen ohne jede Wartezeit ablaufen, jede weitere Funktion aber komplett vom Hauptprozessor gerechnet werden muß. Das führt dazu, daß das Verhalten bzgl. Ausführungsgeschwindigkeit nicht proportional (komplexere Effekte erfordern entsprechend mehr Rechenzeit als einfache), sondern sprunghaft (alles was nur minimal von den Echzeitfähigkeiten abweicht, erfordert überproportional lange Rechenzeiten) ansteigt.

Obwohl ein Editing-System ein Werkzeug sein sollte, das so funktioniert, wie der Anwender es erwartet, wird somit der Editor in seinen Möglichkeiten eingeschränkt und gezwungen, auf die Einschränkungen des Systems in seiner Arbeit Rücksicht zu nehmen. Der eine oder andere Effekt ist dann eben nicht (oder nicht in der zur Verfügung stehenden Zeit) erreichbar.

Zusätzlich lasten Echtzeit-Systemen natürlich die Beschränkungen von jeder speziell für einen Zweck entworfenen Hardware an. Die Algorithmen sind nur in fest definierten Rahmen parametrisierbar, eine Anpassung an Kundenwünsche (z. B. höhere Qualität) oder technische Weiterentwicklungen (z. B. höhere Auflösungen, HDTV) zieht in den meisten Fällen unweigerlich eine Neuentwicklung nach sich.

Um das Problem zu umgehen, daß die Funktionen außerhalb der Echtzeitfähigkeit so überproportional lange zur Berechnung benötigen, können diese Funktionen zur Berechnung auf mehrere PC-Hauptprozessoren aufgeteilt werden. Gerade mit der steigenden Leistungsfähigkeit der Hauptprozessoren und der Festplattensysteme gewinnt diese Technologie an Bedeutung. Alle Systeme, die diese Technik unterstützen, teilen die Berechnung eines einzelnen Bildes, das nächste Bild kann erst berechnet werde, wenn die Berechnung des vorhergehenden abgeschlossen ist.

Diese Technologie hat allerdings eine Vielzahl von Einschränkungen, die speziell bei der Videobearbeitung (hohe Datenmengen, Arbeiten mit komprimierten Daten) ins Gewicht fallen. Von diesen Nachteilen seien einige im folgenden aufgeführt:

Der PCI-Bus wird belastet. Beim Arbeiten mit komprimiertem Video muß jedes Bild vor einer Berechnung dekomprimiert werden. Manipulation auf komprimierter Ebene sind nicht möglich Da teure, dedizierte Chips für die Kompression und Dekompression eingesetzt werde, muß das komprimierte Bildmaterial zunächst (über den PCI Bus) zur Videohardware, und das unkomprimierte Material dann (ebenfalls über den PCI Bus) in den Hauptspeicher transferiert werden. Bei mehreren Ebenen muß das für jedes Quellbild erfolgen. Für jeden einzelnen Berechnungsschritt wird zudem eine eigene (temporäre, unkomprimierte) Kopie des Bildes im Hauptspeicher abgelegt ("Memcopy"), das Ergebnis muß dann in umgekehrter Reihenfolge wieder auf der Videohardware komprimiert und auf der Festplatte abgelegt werden. Diese räumliche Trennung erhöht den Verkehr ("Traffic") auf dem PCI Bus enorm. Da dieser Bus eine maximale Bandbreite von 132 MB/s besitzt, die im Realfall nicht ausgelastet werden kann und darüber hinaus von allen Komponenten im PC (auch Grafikkarte, etc.) benutzt wird, ist der Transfer der Daten durch das System einer der Hauptgründe für die langen Rechenzeiten.

Ferner werden die Hauptprozessoren werden beim Rendering belastet. Moderne Betriebssysteme unterstützen das gleichzeitige Ausführen mehrerer Programme (Muttitasking). Theoretisch kann somit während des Rendervorganges am Schnitt weitergearbeitet werden. Da jedoch bei der beschriebenen Methodik der Hauptprozessor entscheidend vom Renderprozeß sowie zur Verwaltung des Datentransportes verwendet wird, konkurrieren die beiden Tasks maßgeblich. Der Bediener merkt dies indem sein System "langsamer" wird, also nicht mehr in der gewohnten Geschwindigkeit reagiert.

Auch bei mehreren Prozessoren, die parallel an kleineren Teilen eines Bildes arbeiten, treten diese Einschränkungen auf. Zusätzlich muß noch die Aufteilung des Bildes auf die Prozessoren geregelt und sichergestellt werden, daß am Ende die berechneten Teile wieder korrekt zusammengefügt werden.

Eine weitere Einschränkung ist die (derzeit) beschränkte Skalierbarkeit der Systeme. Maximal 4 Prozessoren können derzeit in einem System integriert werden, ohne daß hochspezialisierte Hardware benutzt werden muß.

Schließlich sind im Stand der Technik spezielle Renderbeschleuniger bekannt, um das Problem des Traffic zu reduzieren. Diese separate Hardware besteht aus mehreren Prozessoren und viel Speicher, der durch einen extrem schnellen Bus mit den Prozessoren verbunden ist. Dadurch wird das Problem des langsamen Speicherzugriffs über den Hauptprozessor (Memcopies) und die hohe Belastung des Hauptprozessors reduziert Solche Lösungen können für einzelne Funktionen sehr schnell rechnen (je nach Optimierung), das Problem der Busbelastung durch den Transport unkomprimierter Daten durch das System besteht jedoch weiterhin.

Ferner ist diese Lösung nicht beliebig skalierbar, was hauptsächlich an der Grundarchitektur liegt: jedes Bild wird in mehrere Abschnitte unterteilt, die dann von je einem Prozessor gerendert werden. Erst wenn alle Abschnitte gerendert sind, kann das nächste Bild in Angriff genommen werden. Die Größe der einzelnen Abschnitte ist dabei nach unten beschränkt. Ab einer gewissen Größe macht eine weitere Aufteilung keinen Sinn mehr, die Balance zwischen Rechenzeit und Transportzeit geht verloren. Zudem stehen dem physikalische Grenzen entgegen: auf eine PCI-Karte passen nur eine begrenzte Anzahl von Prozessoren.

Eine weitere Problematik ist die hohe Spezialisierung des Ansatzes. Für jede einzelne Funktion muß der Verteilungsprozeß neu definiert werden. Eine Rotation eines Bildes muß anders aufgeteilt werden als z. B. eine Skalierung, da ansonsten Rundungsfehler, die beim Zusammensetzen der Teile unweigerlich entstehen, für ein unharmonisches Gesamtbild sorgen wurden. Einige Funktionen eignen sich also weniger gut als andere für dieses Konzept.

Zum Stand der Technik wird ferner auf das U.S.-Patent 4,942,470 aufmerksam gemacht, aus welchem ein Echtzeit-Videosignalprozessor für eine digitale Echtzeit-Bearbeitung von Videosignalen mit einer Vielzahl von Einheitsprozessoren bekannt ist. Alle Einheitsprozessoren sind parallel zwischen einem Eingangsbus und einem Ausgangsbus verbunden. Jeder Einheitsprozessor besteht aus einem Eingangsabschnitt, der mit dem Eingangsbus verbunden ist, einen Verarbeitungsabschnitt für eine digitale Verarbeitung von in den Eingangsabschnitt geschriebenen Videosignalen und einen Ausgangsabschnitt zum Liefern von Videosignalen an den Ausgangsbus, die von dem Verarbeitungsabschnitt verarbeitet wurden. Ferner sind Steuerabschnitte vorgesehen zum Erzeugen von Steuersignalen, um zu befehlen, welcher Bildblock von jedem Frame in jeden Einheitsprozessor geschrieben werden soll und welcher Bildblock von jedem verarbeitetern Frame ausgegeben werden soll.

Die Aufgabe der vorliegenden Erfindung besteht daher darin, die Nachteile des Standes der Technik zu vermeiden, und insbesondere eine Vorrichtung und ein Verfahren zur Bearbeitung von zeitlich aufeinanderfolgenden Datenpaketen zu schaffen bzw: anzuheben, um mit erhöhter Bearbeitungsgeschwindigkeit und gleichzeitig kostengünstiger Realisierung, insbesondere eine digitale Bildbearbeitung zu ermöglichen.

Diese Aufgabe wird in vorrichtungstechnischer Hinsicht durch die in den Patentansprüchen 1 und 34 angegebenen Merkmalskombination gelöst. In verfahrenstechnischer Hinsicht erfolgt die Lösung durch Patentanspruch 26 bis 27.

Ein Vorteil der vorliegenden Erfindung besteht in der optimalen Ausnutzung der Bandbreite. Dadurch, daß nur komprimierte Daten über den PCI-Bus transportiert und keine Memcopies im Hauptspeicher abgelegt werden (da die Berechnung komplett in einer Prozessor/Speicher-Einheit geschieht), wird der PCI-Bus signifikant weniger belastet als bei allen anderen Ansätzen. Weil weder die Verteilung der Aufgaben noch das Rendern durch den Hauptprozessor ausgeführt wird, ist die Methode ideal für echtes Multitasking, also uneingeschränktes Arbeiten bei gleichzeitigem Rendern im Hintergrund.

Ein weiter Vorteil der vorliegenden Erfindung besteht femer in dem einfachen und kostengünstigen Aufbau, sowie in der Skalierbarkeit. Weil jeder Prozessor genau ein vertikales Frame bearbeitet, kann durch Hinzufügen von Prozessoren und/oder Pipelines die Anzahl der "im voraus" gleichzeitig berechneten Frames erhöht werden. Dabei stößt das Konzept erst viel später an die Grenze der Bandbreite des PCI-Bus, da ja nur komprimierte Daten übertragen werden. Da die Beschleunigung dadurch erreicht wirdr, daß der Transport entscheidend reduziert und an mehreren Bildern gleichzeitig gerechnet wird, ist das Verteilen der Daten sehr einfach und muß nicht für jede Funktion separa: betrachtet werden. Wenn eine Prozessor/Speichereinheit einen Frame gerechnet hat, so gibt sie diesen weiter an den Ringpuffer zur Komprimierung und fordert die Daten für einen gesamten neuen vertikalen Frame vom Ringpuffer nach der Dekompression an.

Ein weiterer Vorteil der vorliegenden Erfindung besteht in der Prozessorunabhängigkeit. Im Prinzip ist die erfindungsgemäße Architektur völlig unabhängig von dem verwendeten Prozessortyp.

Sogar ein Mischen verschiedener Prozessoren ist unproblematisch, sofern sichergestellt ist, daß alle Prozessoren bei gleichen Voraussetzungen exakt gleiche Ergebnisse erzielen.

Ferner ist bei der erfindungsgemäßen Lösung vorteilhaft, daß sich das erfindungsgemäß vorgeschlagene Verfahren bzw. Vorrichtung gegenüber dem Anwender sehr natürlich bzw. logisch verhält. Komplexe Effekte erfordern mehr Rechenzeit als einfache, eine Ebene mehr bedeutet proportional mehr Rechenaufwand. Femer läßt sich der Systemaufwand bei bekannten Bearbeitungsaufwand im voraus einfach abschätzen.

Schließlich ist vorteilhaft, daß unabhängig von Format, Auflösung und Qualität Videobearbeitung durchgeführt werden kann. Höhere (oder niedrigere) Auflösungen und andere Qualitätsanforderungen bzw. neue Algorithmen können einfach durch Änderung der im Prozessor gespeicherten Software erreicht werden. Werden Kompression und Dekompression durch eine dedizierte Hardware ausgeführt, bestimmt diese natürlich die Randparameter des verwendeten Formats.

Bevorzugte Ausgestaltungen der Erfindung sind in den abhängigen Patentansprüchen offenbart.

Die Erfindung, sowie weitere Merkmale und Ausgestaltungen derselben wird bzw. werden nachfolgendend unter Bezugnahme auf die beigefügten Zeichnungen näher erläutert. Überall in den Zeichnungen bezeichnen dieselben oder ähnliche Bezugszeichen entsprechende Elemente. In den Zeichnungen zeigen:
- Fig. 1: ein schematisches Diagramm zur Veranschaulichung der erfindungsgemäßen Vorrichtung zur Bearbeitung von zeitlich aufeinanderfolgenden Datenpaketen;
- Fig. 2: ein schematisches Diagramm zur Veranschaulichung des erfindungsgemäßen Verfahrens zur Bearbeitung von zeitlich aufeinanderfolgenden Datenpaketen;
- Fig. 3: eine schematische Darstellung von zeitlich aufeinanderfolgenden Datenpaketen, wie sie bei der Videobearbeitung auftreten;
- Fig. 4: eine stark vereinfachte schematische Darstellung einer weiteren Variante der vorliegenden Erfindung; und
- Fig. 5: eine stark vereinfachte schematische Darstellung einer weiteren Variante der vorliegenden Erfindung.

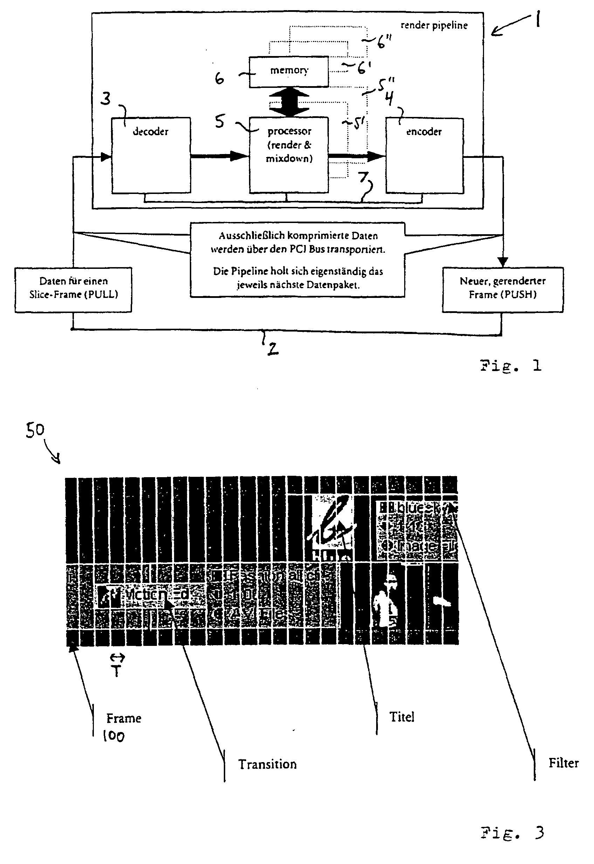

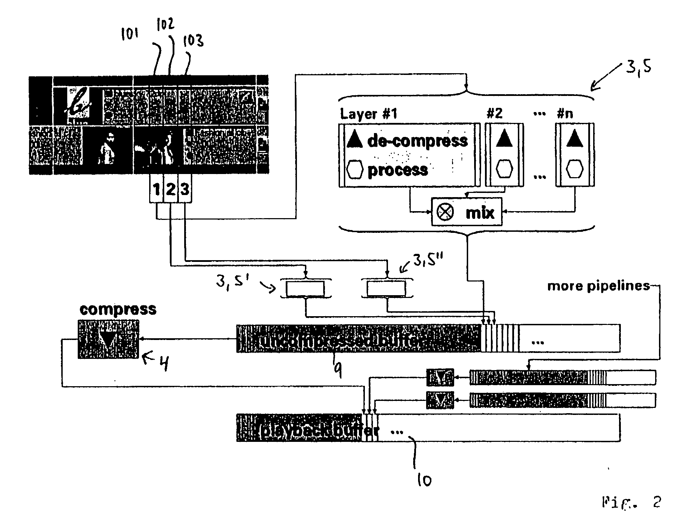

In Fig. 1 ist in einem Blockschaltbild schematisch die erfindungsgemäße Vorrichtung oder Modul 1 zur Realisierung des erfindungsgemäßen Lösungsansatzes "Pipelining mit Dispatcher" dargestellt. Die Vorrichtung 1 zur Bearbeitung von zeitlich diskreten Frames 100 (vgl. Fig. 2 und 3) eines Videosignals steht über einen PCI-Bus 2 mit einer (nicht dargestellten) CPU eines Personalcomputers in Verbindung. Die Vorrichtung 1 weist einen Decodierer 3, einen Codierer 4 und eine Vielzahl von lokalen Prozessoren oder Rendering-CPU's 5, die jeweils mit einem lokalem Speicher 6 Daten austauschen, auf. In Fig. 1 ist mit einer durchgezogenen Linie ein Prozessor 5 und sein zugehöriger Speicher 6 schematisch dargestellt. Weitere optionale Prozessoren sind mit 5' und 5" bezeichnet und durch eine punktierte Linie dargestellt. Diesem zugeordnet sind jeweils ein punktiert dargestellter Speicher 6' bzw. 6". Die Prozessoren 5, 5', 5"... stehen mit jeweils einem (nicht dargestellten) lokalen Bus mit den Speichern 6, 6' 6"... in Verbindung und können über diesen Daten austauschen. Die Speicher 6, 6', 6" dienen insbesondere zur (Zwischen-) Speicherung von Ergebnissen von in den Prozessoren 5, 5' bzw. 5" durchgeführten Operationen. Der Decodierer 3, der Codierer 4 und der Prozessor 5 stehen über einen lokalen Bus 7 der Vorrichtung 1 in Verbindung. Es sei bemerkt, daß über den PCI-Bus 2 im Gegensatz zu dem lokalen Bus 7 lediglich komprimierte Datenpakete übertragen werden, wodurch dieser erheblich weniger belastet wird als nach den vom Stand der Technik vorgeschlagenen Lösungen. Der Prozessor 5 (5',5"...) weist alle für das Rendering erforderlichen Renderprogramme, sowie ein Dispatcherprogramm auf, was im folgenden noch näher erläutert wird.

Der Betrieb der erfindungsgemäßen Vorrichtung 1 wird im folgenden unter Bezugnahme auf die Fig. 2 und 3 näher beschrieben. Die Bearbeitungsreihenfolge der zu Bearbeitung anstehenden Frame 100 eines Videosignals ist in Fig. 1 durch Pfeile dargestellt. Mit der erfindungsgemäßen Vorrichtung 1 können insbesondere bei der Nachbearbeitung von Videosignalen Szenen gekürzt, verändert, und neu zusammengefügt werden. Dabei treten insbesondere folgende Manipulationen (Fig. 3) auf:
- Transition/Übergangseffekt: zwischen zwei Szenen wird nicht hart umgeschnitten sondern mittels eines mehr oder weniger komplexen "digitalen Videoeffekts", DVE, ein Übergang geschaffen. Typisch sind, z. B. Blenden oder Blättereffekte ("page turn").
- Filter/Effekt: auf eine (oder mehrere) Szene(n) wird ein modifizierter Filter angewandt, der sich auf den (bzw. die) gesamte(n) Szene(n) auswirkt. Typisch sind z. B. Farbkorrektur, Größenveränderung (PiP, Bild in Bild), künstlerische Filter (schwarz/weiß, sepia, "alter Film", etc.).
- Keying/Maskieren: um Teile eines Bildes gegenüber den Hintergrund transparent ausschneiden zu können, werden Farb- oder Helligkeitsstanzen (Key) oder Masken verwendet. Wichtigster Vertreter ist der Blue- oder Greenscreen, bei dem Handlung vor einem vollständig blauen oder grünen Hintergrund gefilmt wird, der später in der Nachbearbeitung durch einen anderen ersetzt werden kann.
- Vertiteln: über einen Teil des oder den gesamten Film wird ein Titel gelegt, der entweder stehend (still), von links nach rechts (crawl) oder von unten nach oben (roll) erscheint. Namenseinblendungen ("Bauchbinden") oder Abspänne sind häufig verwendete Arten.

Am Ende einer Manipulation bzw. aller Manipulationen einer Zeiteinheit ("frame") werden im Prozessor 5 (5', 5"...) alle in diesem Frame zu berücksichtigen Ebenen aufeinandergerechnet. Dieser Vorgang wird auch als "Mixdown" bezeichnet. Es sei bemerkt, daß alle zuvor beschriebenen Manipulationen sowie der Mixdown ausschließlich in der transparenten Ebene, d. h. in der erfindungsgemäßen Vorrichtung 1, ausgeführt werden. Eine direkte Manipulation von komprimierten Bilddaten ist nicht möglich, weshalb vor der Manipulation in den Prozessoren 5, 5', 5" bei komprimiert arbeitenden Systemen immer eine Dekompression durch den Decodierer 3 und anschließend eine erneute Kompression durch den Codierer 4 erfolgen muß. Als Rendering bezeichnet man das Ausführen der Manipulationen und das Zusammenrechnen aller beteiligten Ebenen zu einem Frame. Das Rendering wird ebenfalls vollständig im Prozessor 5 (5',5"...) durchgeführt.

Vorliegend kommt ein Konzept zur Anwendung, das im Ergebnis einem Echtzeit-Rendering nahekommt, technisch aber im wesentlichen asynchron arbeitet. Das erfindungsgemäße System stellt daher eine Hybridtechnologie dar, welche gestattet, daß die Verarbeitung "in time" erfolgt.

In Fig. 3 ist etwa eine Sekunde eines Videosignals 50 dargestellt. Das Videosignal 50 weist zeitlich diskrete und aufeinanderfolgende Datenpakete, sogenannte Frames 100, auf. Die Frames 100, welche den konstanten zeitlichen Abstand T besitzen, weisen unterschiedliche Ebenen oder Layer in Bezug auf die zu realisierende Effekte auf. Ein erster Frame 101 (Fig. 3) wird durch das Dispatcherprogramm des Prozessors 5 vom Hauptprozessor über den PCI-Bus 2 angefordert (PULL) auf den lokalen Bus 7 der Vorrichtung 1 angefordert. Anschließend entkomprimiert der Decodierer 3 das Datenpaket 101. Das Datenpaket 101 weist n zur Bearbeitung anstehende Ebenen auf. Die einzelnen Ebenen 1 bis n werden gesondert von dem Decodierer 3 entkomprimiert, was in Fig. 2 schematisch durch nach oben zugespitzte Dreiecke angezeigt wird. Die einzelnen Ebenen 1 bis n werden anschließend in den Prozessor 5 verarbeitet, was schematisch durch ein Sechseck dargestellt ist. Nach der Manipulation der dekomprimierten Ebenen werden diese Resultate ebenfalls in dem Prozessor 5 herabgemischt. Das Herabmischen ist schematisch durch das Mischersymbol (Kreis mit Kreuz) dargestellt. Die in dem Decodierer 3 und dem Prozessor 5 auftretenden Operationen sind in Fig. 2 schematisch durch eine geschweifte Klammer zusammengefaßt. Entsprechend werden parallel die bezeichneten Datenpakete 102 und 103 von dem Dekodierer 3 entkomprimiert und von den Prozessoren 5' bzw. 5" verarbeitet. Das unkomprimierte Resultat der Bearbeitung durch die Prozessoren 5, 5', 5" wird an jeweils unterschiedliche Speicherplätze eines unkomprimierten Pufferspeichers 9 abgelegt. Anschließend werden die bearbeiteten Datenpakcte 101, 102, 103 in dieser Reihenfolge von dem Codierer 4 komprimiert und in einem Playback-Pufferspeicher 10 an aufeinanderfolgende Speicherplätze abgelegt. Der dem Vorgang des Dekomprimierens inverse Vorgang des Komprimierens ist in Fig. 2 schematisch durch ein mit der Spitze nach unten weisendes Dreieck dargestellt. Der PCI-Bus 2 kann auf diese Speicherplätze der Playback-Pufferspeichers 10 zugreifen.

Durch das dem Prozessor 5 eigene Dispatcherprogramm wird nach der Bearbeitung des Datenpakets 101 die Weitergabe an die Pufferspeichereinrichtung 9 (PUSH) ausgelöst. Da der Prozessor 5 somit wieder zur Bearbeitung eines weiteren Datenpakets zur Verfügung steht, fordert dieser (PULL) über den PCI-Bus 2 ein weiteres, späteres Datenpaket zur Dekompression durch den Decodierer 3 und zur anschließenden Bearbeitung an.

Es sei bemerkt, daß erfindungsgemäß der Decodierer 3 und der Codierer 4 permanent Daten dekomprimieren bzw. komprimieren. Der im Verhältnis dazu wesentlich länger dauernde Vorgang der Bearbeitung in den Prozessoren 5, 5', 5", 5'" wird durch deren Anzahl kompensiert, so daß nach einer gewissen Anfangsphase eine "Quasi-"Echtzeitbearbeitung erreicht wird, da die bearbeiteten Datenpakete auf der Playback-Pufferspeichereinrichtung 10 mit dem zeitlichen Abstand T abrufbar sind. Es entsteht lediglich unter Umständen eine gewisse Anfangsverzögerung, durch die Berechnung des bzw. der ersten Datenpakete, welche im Hinblick auf die zahlreichen Vorteile des erfindungsgemäßen Verfahrens in Kauf genommen werden kann.

Der Darstellung der Fig. 2 entnimmt man ebenfalls, daß zur weiteren Erhöhung der Effizienz des erfindungsgemäß vorgeschlagenen Systems eine Vielzahl von Pipelines, die gemäß Fig. 1 aufgebaut sind, verwendet werden können. Diese zusätzlichen Vorrichtungen 1 legen deren komprimierte Resultate ebenfalls im Playback-Pufferspeicher 10 ab.

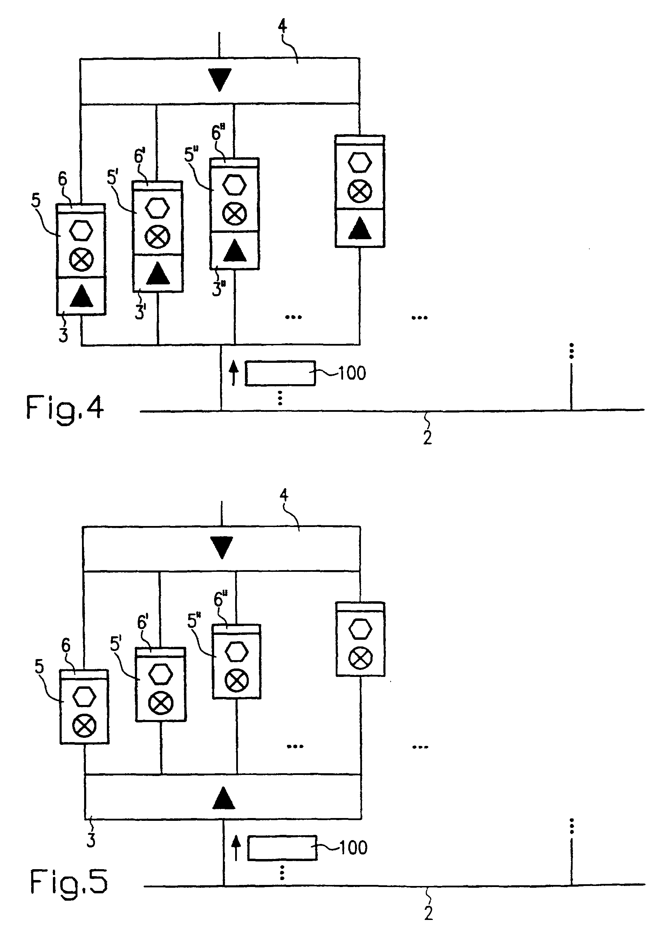

Anhand der stark schematischen und vereinfachten Darstellung der Fig. 4 wird im folgenden eine weitere Ausführungsvariante der vorliegenden Erfindung beschrieben. Von einem. Hauptprozessor mittels einer Bereitstellungsroutine auf dem Systembus 2 zur Verfugung gestellte Datenpakete 100 (die kontinuierlich und zeitlich diskret zur Bearbeitung anstehenden Datenpakete sind durch vertikale Punkte repräsentiert) werden nacheinander von den einzelnen Prozessoren 5, 5', 5" über das jeweilige in diesen Prozessoren vorhandene Dispatcherprogramm (PULL) angefordert. Die in den Prozessoren 5, 5', 5" erfolgende Verarbeitung ist durch Sechsecke und mit einem Kreuz versehene Kreise dargestellt. Bei der Verarbeitung bzw. Berechnung anfallende Zwischenergebnisse bzw. Zwischenlayer werden jeweils in einem den Prozessoren 5, 5', 5" zugeordneten Speicher 6, 6' bzw. 6", welcher mit den jeweiligen Prozessoren 5, 5', 5" über einen lokalen Bus verbunden ist, abgelegt. Man entnimmt der Darstellung der Fig. 4, daß zur Dekomprimierung der komprimierten Datenpakete 100 jeweilige Decodiereinrichtungen 3, 3', 3" vorgesehen sind, welche im Ausführungsbeispiel zusammen mit den jeweiligen Prozessoren 5, 5', 5" eine Einheit bilden. Die Prozessoren 5, 5', 5" besitzen daher im Ausführungsbeispiel nicht nur ein Rendering-Programm sowie ein Programm zum Zusammenrechnen aller berechneten Ebenen, sondern ebenfalls ein Decodierungs- bzw. Dekompressionsprogramm. Den horizontalen Punkten der Fig. 4 entnimmt man, daß die Anzahl der Prozessoren 5, 5', 5" grundsätzlich nach oben nicht beschränkt ist. Selbstverständlich wird die Anzahl der verwendeten Prozessoren 5, 5', 5" (und der zugehörigen Speichereinrichtungen 6, 6', 6") durch eine Systemauslegung bestimmt, welche ermöglicht, (im Mittel) eine rechtzeitige- "Quasi"-Echtzeitverarbeitung der Datenpakete 100 zu garantieren. Vorzugsweise wird dazu das System derart ausgelegt, daß es eine Überschußverarbeitungskapazität besitzt. Nach der Verarbeitung der Datenpakete 100 werden diese anschließend durch eine einzige Codiereinrichtung 4 erneut codiert bzw. komprimiert, und an diese von den Prozessoren 5, 5', 5" über die PUSH-Funktionalität des in den Prozessoren 5, 5', 5" gespeicherten Dispatcher-Programms geliefert. Der Fig. 4 entnimmt man, daß die unterschiedlichen vertikalen Positionen der Prozessoren 5. 5', 5" deren relativen Bearbeitungsstand anzeigen. D. h., der Prozessor 5" ist in der Verarbeitung eines Datenpakets 100 weiter fortgeschritten als der Prozessor 5', und letzterer wiederum weiter als der Prozessor 5. Obwohl in Fig. 4 dargestellt ist, daß die erfindungsgemäße Vorrichtung 1 lediglich eine einzige Codiereinrichtung 4 und eine Vielzahl von Prozessoren 5, 5', 5", welche integriert eine Decodierfunktion 3, 3', 3" besitzen, aufweist, beschränkt dies in keiner Weise die Erfindung. Es sei bemerkt, daß erfindungsgemäß, wie in Fig. 1 dargestellt, auch lediglich eine einzige Decodiereinrichtung 3 welche dann vorzugsweise baulich getrennt von den Prozessoren 5, 5', 5" ausgebildet ist, vorgesehen sein kann. Ferner kann auch eine Vielzahl von Codiereinrichtungen 4 vorgesehen sein, welche die verarbeiteten Datenpakete 100, insbesondere parallel, codieren bzw. komprimieren. Es ist aber aus systemtechnischen Gründen und aus Kostengründen bevorzugt, weniger Codiereinrichtungen 4 als Decodiereinrichtungen 3 zu verwenden. Ferner entnimmt man der Darstellung der Fig. 4, wie auch der Darstellung der Fig. 3, daß eine Vielzahl von identisch oder abgewandelt ausgebildeten Vorrichtungen 1 zusammen eine erfindungsgemäße Anordnung bilden. Eine derartige Anordnung mit einer oder mehreren Vorrichtungen 1 kann aus Gründen der erforderlichen Bearbeitungskapazität vorteilhaft sein.

Der Darstellung der Fig. 5 entnimmt man eine weitere Ausführungsvariante der vorliegenden Erfindung. Die in Fig. 5 dargestellte Variante unterscheidet sich von der zuvor in Fig. 4 beschriebenen Ausführungsform im wesentlichen dahingehend, daß lediglich eine Decodiereinrichtung 3 zu Dekompression der Datenpakete 100 vorgesehen ist. Die Decodiereinrichtung 3 ist in dem Fig. 5 dargestellten Ausf-uhrungsbeispiel der Erfindung eine von den Prozessoren 5, 5', 5" baulich getrennte Einheit. Wie oben bereits bemerkt wurde können, von der Erfindung umfaßt auch mehrere Decodiereinrichtungen 3 und Codiereinnchtungen 4 erfindungsgemäß verwendet werden, wobei diese dann jeweils unabhängig voneinander oder zusammenarbeitend betrieben werden können. Ferner können die Decodiereinrichtung(en) 3 und/oder die Codiereinrichtung(en) 4 auch in die Prozessoren 5, 5', 5" hardwarmäßig und/oder softwaretechnisch vollständig oder teilweise integriert werden.

Die Erfindung wurde zuvor anhand eines bevorzugten Ausführungsbeispiels beschrieben. Für einen Fachmann ist es jedoch offensichtlich, daß verschiedenen Abwandlungen und Modifikationen gemacht werden können, ohne von dem der Erfindung zugrundeliegenden Gedanken abzuweichen. Die Grundideen der vorliegenden Erfindung lassen sich ohne Beschränkung folgendermaßen zusammenfassen:
- Ausnutzung der zeitlich diskreten Struktur von Video (Anzahl aufeinanderfolgender Bilder mit gleicher Größe und gleicher Laufzeit).
- Integration der Funktionsblöcke Dekompression, Prozessor, Speicher und Kompression zu einer Pipeline, wobei innerhalb der Pipeline auch mehrere Prozessoren, jeder mit eigenem Speicher, arbeiten können.
- Beschränkung auf die Berechnung genau eines vertikalen Frames pro Prozessor pro Rendertask (das Bild wird nicht weiter unterteilt) mit dem Einsatz eines "Dispatcher"-Programmes, das selbständig die gesamten (komprimierten) Daten für den nächsten vertikalen Frame anfordern kann (PULL) und den fertig gerenderten Frame auch selbständig wieder an den Festplattencontroller übergeben kann (PUSH). Alle Render-Routinen sowie das Dispatcher-Programm sind in jedem Prozessor vorhanden.

In der Praxis kann mit dem erfindungsgemäßen Konzept komplett im Hintergrund, vollständig unabhängig vom Hauptprozessor, gerendert werde. Dabei wird ausgenutzt, daß Video (in 625/50 Hz Systemen) immer mit 25 Bildern pro Sekunde Laufzeit abgespielt wird. Der Anwender muß also genau so lange warten, bis das erste Frame gerechnet wurde. Solange die Render-Pipeline schneller als 25 Bilder pro Sekunde rendem kann (was in den allermeisten Fällen zumindest im Durchschnitt über eine bestimmte Zeitspanne möglich ist), bemerkt der Anwender keine Verzögerung. Die Pipeline rendert sozusagen "im voraus", jeder einzelne schon gerenderte Frame ist sofort abspielbar. Ist die Verteilung der Frames so intelligent, daß zunächst Frames in der unmittelbaren Umgebung der momentanen Position gerendert werden, wird der Anwender in der Handhabung keinen Unterschied zu einem Echzeitsystem feststellen.

### Bezugszeichenliste:

- 1: Vorrichtung oder Modul
- 2: Systembus oder PCI-Bus
- 3: Decodiereinrichtung
- 4: Codiereinrichtung
- 5, 5', 5": Prozessor oder Rendering-CPU
- 6, 6', 6": Speichereinrichtung
- 7: lokaler Bus
- 9: Pufferspeichereinrichtung
- 10: Playback-Pufferspeichereinrichtung
- 50: Videosignal
- 100: Datenpaket oder Frame
- 101: Datenpaket oder Frame
- 102: Datenpaket oder Frame
- T: zeitlicher Abstand der Datenpakete

## Patentansprüche

1. Vorrichtung (1) zur Bearbeitung von zeitlich aufeinanderfolgenden Datenpaketen (101, 102, 103) mit wenigstens einer Decodiereinrichtung (3), einer Vielzahl von Prozessoreinrichtungen (5, 5', 5"...), einer jeweils einer Prozessoreinrichtung (5, 5', 5'' ...) zugeordneten Speichereinrichtung (6, 6', 6"...) und wenigstens einer Codiereinrichtung (4), wobei jeweils eine Prozessoreinrichtung (5,5', 5"..) ein Datenpaket (101, 102, 103) bearbeitet, **dadurch gekennzeichnet, daß** das Datenpaket (101, 102,103) das gesamte Ebenenpaket eines Frames aufweist.

2. Vorrichtung (1) nach Anspruch 1, **dadurch gekennzeichnet, daß** jeweils ein Datenpaket (101, 102,103) eine Zeiteinheit oder Frame eines Videosignals ist.

3. Vorrichtung (1) nach einem der vorhergehenden Ansprüche, **dadurch gekennzeichnet, daß** die wenigstens eine Decodiereinrichtung (3), die Vielzahl von Prozessoreinrichtungen (5, 5', 5"...) und die wenigstens eine Codiereinrichtung in dieser Reihenfolge die Datenpakete (101, 102,103), insbesondere nach Art einer Pipeline, bearbeiten.

4. Vorrichtung (1) nach einem der vorhergehenden Ansprüche, **dadurch gekennzeichnet, daß** jeweils ein unbearbeitetes und codiertes Datenpaket (101, 102, 103) über einen Bus von einem Hauptprozessor durch jeweils einer Prozessoreinrichtung (5, 5', 5" ...) angefordert wird.

5. Vorrichtung (1) nach Anspruch 4, **dadurch gekennzeichnet, daß** dieselbe Prozessoreinrichtung (5, 5', 5"...) das Datenpaket (101,102, 103) anfordert und bearbeitet.

6. Vorrichtung (1) nach einem der vorhergehenden Ansprüche, **dadurch gekennzeichnet, daß** ein bearbeitetes und codiertes Datenpaket (101, 102, 103) über einen Bus an einen Hauptprozessor geliefert wird.

7. Vorrichtung (1) nach einem der Ansprüche 4 bis 6, **dadurch gekennzeichnet, daß** der Bus ein Systembus (2) und der Hauptprozessor eine CPU eines Personalcomputers ist.

8. Vorrichtung (1) nach einem der vorhergehenden Ansprüche, **dadurch gekennzeichnet, daß** die Prozessoreinrichtung (5, 5', 5"...) ein Programm für das Rendering und das Aufeinanderrechnen aller Ebenen aufweist.

9. Vorrichtung (1) nach einem der vorhergehenden Ansprüche, **dadurch gekennzeichnet, daß** die Prozessoreinrichtung (5, 5', 5"...) ein Ablaufsteuer- oder Zuteilungsprogramm aufweist, welches ein Datenpaket (101, 102, 103) vom Systembus, insbesondere über die Decodiereinrichtung (3), anfordert.

10. Vorrichtung (1) nach Anspruch 9, **dadurch gekennzeichnet, daß** das Ablaufsteuer- oder Zuteilungsprogramm ein Liefem des bearbeiteten Datenpakets (101, 102, 103) an den Hauptprozessor, insbesondere über die Codiereinrichtung (4), auslöst.

11. Vorrichtung (1) nach einem der Ansprüche 4 bis 10, **dadurch gekennzeichnet, daß** der Hauptprozessor ein Bereitstellungsprogramm zur Bereitstellung der Datenpakete (101, 102, 103) auf dem Systembus (2) aufweist.

12. Vorrichtung (1) nach einem der Ansprüche 4 bis 11, **dadurch gekennzeichnet, daß** der Hauptprozessor ein Abholprogramm zur Abholung der Datenpakete (101,102,103) vom Systembus (2) aufweist.

13. Vorrichtung (1) nach einem der vorhergehenden Ansprüche, **dadurch gekennzeichnet, daß** eine der Vielzahl von Prozessoreinrichtungen (5, 5', 5" ...) jeweils eines der aufeinanderfolgenden Datenpakete (101, 102, 103) im wesentlichen parallel zu weiteren Prozessoreinrichtungen aus der Vielzahl von Prozessoreinrichtungen (5, 5', 5'' ...) bearbeitet.

14. Vorrichtung (1) nach einem der vorhergehenden Ansprüche, **dadurch gekennzeichnet, daß** die Datenpakete (101, 102, 103) einen konstanten zeitlichen Abstand (T) aufweisen.

15. Vorrichtung (1) nach Anspruch 14, **dadurch gekennzeichnet, daß** die Anzahl der parallel betriebenen Prozessoreinrichtungen (5, 5', 5"...) im wesentlichen der Quotient einer Summe einer mittleren Codierzeit bzw. Decodierzeit und einer mittleren Bearbeitungszeit eines Datenpakets (101, 102, 103) dividiert durch den zeitlichen Abstand (T) ist.

16. Vorrichtung (1) nach einem der vorhergehenden Ansprüche, **dadurch gekennzeichnet, daß** die zeitlich aufeinanderfolgenden Datenpakete (101,102,103) codiert sind.

17. Vorrichtung (1) nach Anspruch 16, **dadurch gekennzeichnet, daß** die zeitlich aufeinanderfolgenden Datenpakete (101, 102, 103) komprimiert sind.

18. Vorrichtung (1) nach Anspruch 17, **dadurch gekennzeichnet, daß** die wenigstens eine Decodiereinrichtung (3) zur Dekompression der komprimierten Datenpakete (101, 102, 103) vorgesehen ist, und daß die wenigstens eine Codiereinrichtung (4) zur Kompression von unkomprimierten, von einem Prozessor (5; 5', 5") unkomprimiert bearbeiteten Datenpaketen (101, 102, 103) vorgesehen ist.

19. Vorrichtung (1) nach einem der vorhergehenden Ansprüche, **dadurch gekennzeichnet, daß** die wenigstens eine Decodiereinrichtung (3), die Vielzahl von Prozessoren (5, 5', 5'' ...) und die wenigstens eine Codiereinrichtung (4) durch einen lokalen Bus (7) verbunden sind.

20. Vorrichtung (1) nach Anspruch 19, **dadurch gekennzeichnet, daß** über den lokalen Bus (7) ausschließlich die unkomprimierten Daten transportiert werden, während über den Systembus (2) lediglich komprimierte Daten transportiert werden.

21. Vorrichtung (1) nach einem der vorhergehenden Ansprüche, **dadurch gekennzeichnet, daß** die bearbeiteten und komprimierten Datenpakete (101, 102, 103) in einer Playback-Pufferspeichereinrichtung (10) zwischengespeichert werden.

22. Vorrichtung (1) nach Anspruch 21, **dadurch gekennzeichnet, daß** der Hauptprozessor ein Abholprogramm zur Abholung der Datenpakete (101, 102, 103) von der Playback-Pufferspeichereinrichtung (10) zum Systembus (2) aufweist.

23. Vorrichtung (1) nach einem der vorhergehenden Ansprüche, **dadurch gekennzeichnet, daß** jede der Vielzahl von Prozessoreinrichtungen (5, 5', 5"...) ein Decodierprogramm und/oder ein Codierprogramm aufweist.

24. Vorrichtung (1) nach Anspruch 23, **dadurch gekennzeichnet, daß** die jede der Vielzahl von Prozessoreinrichtungen (5, 5', 5'' ...) integriert mit jeweils einer Decodiereinrichtung (3) ausgebildet ist.

25. Vorrichtung (1) nach Anspruch 23 oder 24, **dadurch gekennzeichnet, daß** die jede der Vielzahl von Prozessoreinrichtungen (5, 5', 5'' ...) integriert mit jeweils einer Codiereinrichtung (4) ausgebildet ist.

26. Verfahren zur Bearbeitung von zeitlich aufeinanderfolgenden Datenpaketen (101, 102, 103) mit wenigstens einer Decodiereinrichtung (3), einer Vielzahl von Prozessoreinrichtungen (5, 5', 5" ...), einer jeweils einer Prozessoreinrichtung (5, 5', 5"...) zugeordneten Speichereinrichtung (6, 6', 6" ...) und wenigstens einer Codiereinrichtung (4), wobei jeweils eine Prozessoreinrichtung (5, 5', 5"...) ein Datenpaket (101, 102, 103) bearbeitet, **dadurch gekennzeichnet, daß** das Datenpaket (101, 102, 103) das gesamte Ebenenpaket eines Frames aufweist.

27. Verfahren zur Bearbeitung von zeitlich aufeinanderfolgenden Datenpaketen, insbesondere zur Verwendung mit einer Vorrichtung (1) nach einem der vorhergehenden Ansprüche, mit folgenden Schritten:
(i) Decodieren eines (101) der zeitlich aufeinanderfolgenden Datenpakete;
(ii) Bearbeiten des Datenpakets (101) durch eine Prozessoreinrichtung (5); und
(iii) Codieren des bearbeiteten Datenpakets (101),
**dadurch gekennzeichnet daß** ein weiteres der zeitlich aufeinanderfolgenden Datenpakete (102) durch einen weiteren Prozessor (5') bearbeitet wird, wobei die Schritte Decodieren und Codieren durch dieselbe Decodiereinrichtung (3) und Codiereinrichtung (4) erfolgen.

28. Verfahren nach Anspruch 27, **dadurch gekennzeichnet, daß** ein weiteres Datenpaket (102) solange von einem weiteren Prozessor (5') angefordert wird, bis ein zuvor den Schritt (ii) durchführender Prozessor (5) die Bearbeitung eines Datenpakets (101) beendet hat.

29. Verfahren nach Anspruch 28, **dadurch gekennzeichnet, daß** die Schritte (i) bis (iii) parallel mit unterschiedlichen Datenpaketen (101,102,103) durchgeführt werden.

30. Verfahren nach einem der vorhergehenden Ansprüche 27 bis 29, **dadurch gekennzeichnet, daß** die Schritte (i) bis (iii) kontinuierlich durchgeführt werden.

31. Verfahren nach einem der vorhergehenden Ansprüche 27 bis 30, **dadurch gekennzeichnet, daß** vor dem Schritt (i) ein anstehendes Datenpaket (101, 102, 103) von einem Prozessor (5, 5', 5" ...), welcher nicht momentan den Schritt (b) durchführt, angefordert wird.

32. Verfahren nach einem der vorhergehenden Ansprüche 27 bis 31, **dadurch gekennzeichnet, daß** der Prozessor (5, 5', 5"...) nach dem Schritt (ii) ein bearbeitetes Datenpaket an eine Codiereinrichtung (4) zur Durchführung des Schritts (iii) liefert.

33. Verfahren nach einem der vorhergehenden Ansprüche 27 bis 32, **dadurch gekennzeichnet, daß** bereits verarbeiteten Datenpakete weiterverarbeitet, insbesondere angezeigt, werden, während sich nachfolgende Datenpakete noch in Verarbeitung befinden.

34. Anordnung zur Bearbeitung von zeitlich aufeinanderfolgenden Datenpaketen (101, 102, 103) mit einer Vielzahl von Vorrichtungen (1), welche wenigstens eine Decodiereinrichtung (3), wenigstens einen Prozessor (5) mit einer jeweils dem Prozessor (5) zugeordneten Speichereinrichtung (6) und wenigstens eine Codiereinrichtung (4) aufweist, wobei jeweils eine Prozessoreinrichtung (5) ein Datenpaket (101, 102, 103) bearbeitet,
**dadurch gekennzeichnet, daß** das Datenpaket (101, 102, 103) das gesamte Ebenenpaket eines Frames aufweist.

## Claims

1. Device (1) for processing temporally successive data packets (101, 102, 103) having at least one decoding device (3), a plurality of processor devices (5, 5', 5'' ...), a memory device (6, 6', 6'' ...) respectively allocated to a processor device (5, 5', 5' '...) and at least one coding device (4), wherein in each case one processor device (5, 5',5'' ..) processes one data packet (101, 102, 103), **characterized in that** the data packet (101, 102, 103) comprises the entire plane packet of a frame.

2. Device (1) according to claim 1, **characterized in that** in each case a data packet (101, 102, 103) is a unit of time or frame of a video signal.

3. Device (1) according to any of the preceding claims, **characterized in that** the at least one decoding device (3), the plurality of processor devices (5, 5', 5" ...) and the at least one coding device in this sequence process the data packets (101, 102, 103), in particular in the manner of a pipeline.

4. Device (1) according to any of the preceding claims, **characterized in that** in each case one non-processed and coded data packet (101, 102, 103) is requested by way of a bus from a main processor by one respective processor device (5, 5', 5" ...).

5. Device (1) according to claim 4, **characterized in that** the same processor device (5, 5', 5" ...) requests and processes the data packet (101, 102, 103).

6. Device (1) according to any of the preceding claims, **characterized in that** a processed and coded data packet (101, 102, 103) is delivered to a main processor by way of a bus.

7. Device (1) according to any of claims 4 to 6, **characterized in that** the bus is a system bus (2) and the main processor is a CPU of a personal computer.

8. Device (1) according to any of the preceding claims, **characterized in that** the processor device (5, 5', 5" ...) has a program for the rendering and computation of all the planes one on top of the other.

9. Device (1) according to any of the preceding claims, **characterized in that** the processor device (5, 5', 5'' ...) has a sequence-control or allocation program which requests a data packet (101, 102, 103) from the system bus, in particular by way of the decoding device (3).

10. Device (1) according to claim 9, **characterized in that** the sequence-control or allocation program triggers a delivery of the processed data packet (101, 102, 103) to the main processor, in particular by way of the coding device (4).

11. Device (1) according to any of claims 4 to 10, **characterized in that** the main processor has a making available program for making the data packets (101, 102, 103) available on the system bus (2).

12. Device (1) according to any of claims 4 to 11, **characterized in that** the main processor has a fetching program for fetching the data packets (101, 102, 103) from the system bus (2).

13. Device (1) according to any of the preceding claims, **characterized in that** one of the plurality of processor devices (5, 5', 5''...) processes in each case one of the successive data packets (101, 102, 103) substantially in parallel with further processor devices from the plurality of processor devices (5, 5', 5'' ...).

14. Device (1) according to any of the preceding claims, **characterized in that** the data packets (101, 102, 103) have a constant temporal interval (T).

15. Device (1) according to claim 14, **characterized in that** the number of processor devices (5, 5', 5'' ...) operated in parallel is substantially the quotient of a sum of an average coding time or decoding time and an average processing time of one data packet (101, 102, 103) divided by the temporal interval (T).

16. Device (1) according to any of the preceding claims, **characterized in that** the temporally successive data packets (101, 102, 103) are coded.

17. Device (1) according to claim 16, **characterized in that** the temporally successive data packets (101, 102, 103) are compressed.

18. Device (1) according to claim 17, **characterized in that** the at least one decoding device (3) is provided for the decompression of the compressed data packets (101, 102, 103), and **in that** the at least one coding device (4) is provided for the compression of non-compressed data packets (101, 102, 103) which are processed by a processor (5, 5', 5' ') in the non-compressed state.

19. Device (1) according to any of the preceding claims, **characterized in that** the at least one decoding device (3), the plurality of processors (5, 5', 5" ...) and the at least one coding device (4) are connected by means of a local bus (7).

20. Device (1) according to claim 19, **characterized in that** exclusively the non-compressed data are transported by way of the local bus (7), whilst only compressed data are transported by way of the system bus (2).

21. Device (1) according to any of the preceding claims, **characterized in that** the processed and compressed data packets (101, 102, 103) are stored temporarily in a playback buffer memory device (10).

22. Device (1) according to claim 21, **characterized in that** the main processor has a fetching program for fetching the data packets (101, 102, 103) from the playback buffer memory device (10) to the system bus (2).

23. Device (1) according to any of the preceding claims, **characterized in that** each of the plurality of processor devices (5, 5', 5" ...) has a decoding program and/or a coding program.

24. Device (1) according to claim 23, **characterized in that** each of the plurality of processor devices (5, 5', 5'' ...) is formed so as to be integrated with a respective decoding device (3).

25. Device (1) according to claim 23 or 24, **characterized in that** each of the plurality of processor devices (5, 5', 5" ...) is formed so as to be integrated with a respective coding device (4).

26. Method for processing temporally successive data packets (101, 102, 103) having at least one decoding device (3), a plurality of processor devices (5, 5', 5" ...), a memory device (6, 6', 6' '...) respectively allocated to a processor device (5, 5', 5" ...) and at least one coding device (4), wherein in each case one processor device (5, 5', 5'' ..) processes one data packet (101, 102, 103), **characterized in that** the data packet (101, 102, 103) comprises the entire plane packet of a frame.

27. Method for processing temporally successive data packets, in particular for use with a device (1) according to one of the preceding claims, comprising the following steps:
(i) decoding one (101) of the temporally successive data packets;
(ii) processing the data packet (101) by means of a processor device (5); and
(iii) coding the processed data packet (101),
**characterized in that** a further data packet (102) of the temporally successive data packets is processed by a further processor (5'), with the steps of decoding and coding being effected by the same decoding device (3) and coding device (4).

28. Method according to claim 27, **characterized in that** a further data packet (102) is requested by a further processor (5') for so long until a processor (5) that was previously carrying out step (ii) has finished processing a data packet (101).

29. Method according to claim 28, **characterized in that** the steps (i) to (iii) are carried out in parallel with different data packets (101, 102, 103).

30. Method according to any of the preceding claims 27 to 29, **characterized in that** the steps (i) to (iii) are carried out continuously.

31. Method according to any of the preceding claims 27 to 30, **characterized in that** before step (i) a pending data packet (101, 102, 103) is requested by a processor (5, 5', 5" ...) which is not carrying out step (b) at that moment.

32. Method according to any of the preceding claims 27 to 31, **characterized in that** after step (ii) the processor (5, 5', 5" ...) delivers a processed data packet to a coding device (4) for the purpose of carrying out step (iii).

33. Method according to any of the preceding claims 27 to 32, **characterized in that** data packets which have already been processed are processed further, in particular displayed, while subsequent data packets are still being processed.

34. Arrangement for processing temporally successive data packets (101, 102, 103) with a plurality of devices (1) that have at least one decoding device (3), at least one processor (5) with a memory device (6) respectively allocated to the processor (5) and at least one coding device (4), wherein in each case one processor device (5) processes one data packet (101, 102, 103), **characterized in that** the data packet (101, 102, 103) comprises the entire plane packet of a frame.

## Revendications

1. Dispositif (1) pour le traitement de paquets de données (101, 102, 103) successifs dans le temps avec au moins un décodeur (3), une pluralité de processeurs (5, 5', 5" ...), une mémoire (6, 6', 6'' ...) affectée chaque fois à un processeur (5, 5', 5'' ...) et au moins un codeur (4), un processeur (5, 5', 5'' ...) traite à chaque fois un paquet de données (101, 102, 103), **caractérisé en ce que** le paquet de données (101, 102, 103) comprend le paquet total de couches d'une trame.

2. Dispositif (1) selon la revendication 1, **caractérisé en ce que** chaque paquet de données (101, 102, 103) est une unité de temps ou une trame d'un signal vidéo.

3. Dispositif (1) selon l'une quelconque des revendications précédentes, **caractérisé en ce que** l'au moins un décodeur (3), la pluralité de processeurs (5, 5', 5' ' ...) et l'au moins un codeur traitent, dans cet ordre, les paquets de données (101, 102, 103), en particulier selon la manière pipeline.

4. Dispositif (1) selon l'une quelconque des revendications précédentes, **caractérisé en ce qu'**un paquet de données (101, 102, 103) codé et non traité est demandé à chaque fois par un processeur (5, 5', 5'' ...) à un processeur principal par l'intermédiaire d'un bus.

5. Dispositif (1) selon la revendication 4, **caractérisé en ce que** le même processeur (5, 5', 5'' ...) demande et traite le paquet de données (101, 102, 103).

6. Dispositif (1) selon l'une quelconque des revendications précédentes, **caractérisé en ce qu'**un paquet de données (101, 102, 103) codé et traité est fourni à un processeur principal par un bus.

7. Dispositif (1) selon l'une quelconque des revendications 4 à 6, **caractérisé en ce que** le bus est un bus système (2) et le processeur principal est une unité centrale d'un ordinateur personnel.

8. Dispositif (1) selon l'une quelconque des revendications précédentes, **caractérisé en ce que** le processeur (5, 5' , 5' ' ...) comprend un programme pour le rendering et l'assemblage de toutes les couches.

9. Dispositif (1) selon l'une quelconque des revendications précédentes, **caractérisé en ce que** le processeur (5, 5', 5' ' ...) comprend un programme de contrôle de flux ou d'attribution qui demande un paquet de données (101, 102, 103) au bus système, en particulier par l'intermédiaire du décodeur (3).

10. Dispositif (1) selon la revendication 9, **caractérisé en ce que** le programme de contrôle de flux ou d'attribution déclenche une remise d'un paquet de données (101, 102, 103) traité au processeur principal, en particulier par l'intermédiaire du codeur (4).

11. Dispositif (1) selon l'une quelconque des revendications 4 à 10, **caractérisé en ce que** le processeur principal comprend un programme de mise à disposition pour la mise à disposition des paquets de données (101, 102, 103) sur le bus système (2).

12. Dispositif (1) selon l'une quelconque des revendications 4 à 11, **caractérisé en ce que** le processeur principal comprend un programme de ramassage pour le ramassage des paquets de données (101, 102, 103) du bus système (2).

13. Dispositif (1) selon l'une quelconque des revendications précédentes, **caractérisé en ce qu'**un processeur de la pluralité de processeurs (5, 5', 5''...) traite à chaque fois un des paquets de données (101, 102, 103) successifs parallèlement, pour l'essentiel, à d'autres processeurs issus de la pluralité de processeurs (5, 5', 5" ...).

14. Dispositif (1) selon l'une quelconque des revendications précédentes, **caractérisé en ce que** les paquets de données (101, 102 ,103) présentent un intervalle (T) de temps constant.

15. Dispositif (1) selon la revendication 14, **caractérisé en ce que** le nombre de processeurs (5, 5', 5' ' ...) exploités en parallèle correspond globalement au quotient d'une somme d'un temps moyen de codage ou d'un temps moyen de décodage et d'un temps moyen de traitement d'un paquet de données (101, 102, 103) divisé par l'intervalle (T) de temps.

16. Dispositif (1) selon l'une quelconque des revendications précédentes, **caractérisé en ce que** les paquets de données (101, 102, 103) successifs dans le temps sont codés.

17. Dispositif (1) selon la revendication 16, **caractérisé en ce que** les paquets de données (101, 102, 103) successifs dans le temps sont comprimés.

18. Dispositif (1) selon la revendication 17, **caractérisé en ce que** l'au moins un décodeur (3) est prévu pour la décompression des paquets de données (101, 102, 103) comprimés, et que l'au moins un codeur (4) est prévu pour la compression des paquets de données (101, 102, 103) non comprimés, qui sont traités non comprimés par un processeur (5, 5', 5" ...).

19. Dispositif (1) selon l'une quelconque des revendications précédentes, **caractérisé en ce que** l'au moins un décodeur (3), la pluralité de processeurs (5, 5', 5" ...) et l'au moins un codeur (4) sont reliés par un bus (7) local.

20. Dispositif (1) selon la revendication 19, **caractérisé en ce que** par le bus (7) local sont transportées exclusivement les données non comprimées, alors que par le bus (2) système sont transportés seulement des données comprimées.

21. Dispositif (1) selon l'une quelconque des revendications précédentes, **caractérisé en ce que** les paquets de données (101, 102, 103) traités et comprimés sont stockés temporairement dans une mémoire tampon de lecture (10).

22. Dispositif (1) selon la revendication 21, **caractérisé en ce que** le processeur principal comprend un programme de ramassage pour le ramassage des paquets de donnés (101, 102, 103) de la mémoire tampon de lecture (10) vers le bus système (2).

23. Dispositif (1) selon l'une quelconque des revendications précédentes, **caractérisé en ce que** chaque processeur de la pluralité de processeurs (5, 5', 5" ...) comprend un programme de décodage et/ou un programme de codage.

24. Dispositif (1) selon la revendication 23, **caractérisé en ce que** chaque processeur de la pluralité de processeurs (5, 5', 5 "...) est réalisé respectivement avec un décodeur (3), de manière intégrée.

25. Dispositif (1) selon la revendication 23 ou la revendication 24, **caractérisé en ce que** chaque processeur de la pluralité de processeurs (5, 5', 5"...) est réalisé respectivement avec un codeur (4), de manière intégrée.

26. Procédé pour le traitement de paquets de données (101, 102, 103) successifs dans le temps avec au moins un décodeur (3), une pluralité de processeurs (5, 5', 5'' ...), une mémoire (6, 6', 6' ' ...) affectée chaque fois à un processeur (5, 5', 5' ' ...) et au moins un codeur (4), un processeur (5, 5', 5" ...) traite à chaque fois un paquet de données (101, 102, 103), **caractérisé en ce que** le paquet de données (101, 102, 103) comprend le paquet total de couches d'une trame.

27. Procédé pour le traitement de paquets de données successifs dans le temps, en particulier pour l'utilisation avec un dispositif (1) selon l'une quelconque des revendications précédentes, avec les étapes suivantes :
(i) décodage d'un (101) des paquets de données successifs dans le temps ;
(ii) traitement du paquet de données (101) par un processeur (5) ; et
(iii) codage du paquet de données (101) traité,
**caractérisé en ce qu'**un autre paquet de données (102) successif dans le
temps est traité par un autre processeur (5'), et que les étapes de décodage et de codage ont lieu avec le même décodeur (3) et le même codeur (4).

28. Procédé selon la revendication 27, **caractérisé en ce qu'**un autre paquet de données (102) est demandé par un autre processeur (5') jusqu'à ce qu'un processeur (5), réalisant l'étape (ii) avant, ait terminé le traitement d'un paquet de données (101).

29. Procédé selon la revendication 28, **caractérisé en ce que** les étapes (i) jusqu'à (iii) sont réalisées en parallèle avec différents paquets'de données (101, 102, 103).

30. Procédé selon l'une quelconque des revendications 27 à 29, **caractérisé en ce que** les étapes (i) à (iii) sont réalisées de façon continue.

31. Procédé selon l'une quelconque des revendications 27 à 30, **caractérisé en ce qu'**avant l'étape (i) un paquet de données (101, 102, 103) en attente est demandé par un processeur (5, 5', 5'' ...) qui n'est pas en train de réaliser l'étape (b).

32. Procédé selon l'une quelconque des revendications 27 à 31, **caractérisé en ce que** le processeur (5, 5', 5'' ...) fournit après l'étape (ii) un paquet de données traité à un codeur (4) pour la réalisation de l'étape (iii).

33. Procédé selon l'une quelconque des revendications précédentes 27 à 32, **caractérisé en ce qu'**on réalise le traitement ultérieur, en particulier l'affichage, des paquets de données déjà traités pendant que des paquets de données suivants se trouvent encore en traitement.

34. Système pour le traitement de paquets de données (101, 102, 103) successifs dans le temps avec une pluralité de dispositifs (1), qui comprend au moins un décodeur (3), au moins un processeur (5) avec une mémoire (6) affectée chaque fois au processeur (5) et au moins un codeur (4), un processeur (5) traite à chaque fois un paquet de données (101, 102, 103), **caractérisé en ce que** le paquet de données (101, 102, 103) comprend le paquet total de couches d'une trame.
